# EUROPÄISCHE PATENTSCHRIFT

(11) **EP 2 203 335 B1**
(45) Veröffentlichungstag und Bekanntmachung des Hinweises auf die Patenterteilung: **11.01.2017**
(21) Anmeldenummer: 08840454.6
(22) Anmeldetag: 20.10.2008
(51) Int. Cl.: B60T 8/171, B60T 8/1755, B60G 17/0195, B60W 50/00, B60W 10/18, B60W 10/22

(54) **MODULAR AUFGEBAUTES ELEKTRONISCHES KRAFTFAHRZEUGREGELUNGSSYSTEM**
MODULARLY CONSTRUCTED ELECTRONIC MOTOR VEHICLE CONTROL SYSTEM
SYSTÈME ÉLECTRONIQUE MODULAIRE DE RÉGULATION DE VÉHICULE À MOTEUR

(30) Priorität: 20.10.2007 DE 102007050208; 12.09.2008 DE 102008046957
(43) Veröffentlichungstag der Anmeldung: 07.07.2010
(73) Patentinhaber: Continental Teves AG & Co. oHG, 60488 Frankfurt (DE)
(72) Erfinder: LOHBERG, Peter, 61381 Friedrichsdorf (DE); ZYDEK, Michael, 60529 Frankfurt/main (DE)
(86) Internationale Anmeldenummer: PCT/EP2008/064119
(87) Internationale Veröffentlichungsnummer: WO 2009/050297

(56) Entgegenhaltungen:
- EP-A- 0 999 117
- EP-A- 1 695 886
- DE-A1- 4 014 561
- DE-A1- 10 056 549
- US-A1- 2004 010 383
- US-A1- 2005 278 107

## Beschreibung

Die Erfindung betrifft ein modular aufgebautes elektronisches Kraftfahrzeugregelungssystem gemäß Oberbegriff von Anspruch 1.

Aus der EP 1 313 635 B1 ist eine Vorrichtung zur Fahrdynamikregelung bekannt, welche aus einem Ventilblock und einer mit dem Ventilblock fest verbundenen elektronischen Reglereinheit besteht, wobei innerhalb der Reglereinheit elektronische Bauelemente zumindest für den Bremseneingriff angeordnet sind, die Signale von mindestens einem Fahrdynamiksensor, wie Gierratensensor und/oder Beschleunigungssensor, verarbeiten und wobei im Ventilblock zumindest elektrohydraulische Ventile angeordnet sind, wobei weiterhin mindestens ein Fahrdynamiksensor in der elektronischen Reglereinheit oder dem Ventilblock integriert ist und wobei schließlich dieser insbesondere mit dem Gehäuse der elektronischen Reglereinheit mechanisch verbunden ist oder von diesem umschlossen wird.

In der DE 100 56 549 A1 ist eine Einrichtung zur Erfassung und Verarbeitung von Regelgrößen-Sollwert-Vorgaben und Sensoreingangssignale für Fahrzeugsysteme beschrieben, wobei ein zentrales Modul vorgesehen ist, welches als Zustandsschätzer mit integriertem Fahrzeugmodell aus Eingangssignalen von allen Fahrzeugsystemen und Füllstandsüberwachungseinrichtungen nutzbare, verfälschende äußere Einflüsse berücksichtigende Regelgrößen-Ist-Werte zur Verfügung stellt.

Die EP 0 999 117 A2 beschreibt ein Fahrzeug mit einem Brems- und Lenksystem und einer Recheneinheit, welche anhand von Sensorsignalen für jedes Rad eine Sollbremswirkung sowie für jedes Rad mit Lenkfunktion eine Solllenkwirkung berechnet und diese Sollwerte den Stellsystemen des Brems- und Lenksystems bereitstellt.

Ausgehend von dem zuvor geschilderten Stand der Technik besteht die Aufgabe der vorliegenden Erfindung darin, ein modular aufgebautes elektronisches Kraftfahrzeugregelungssystem anzugeben, welches heutige Anforderungen an moderne Kraftfahrzeuge mit komplexen elektronischen Regelungssystemen besser erfüllt.

Diese Aufgabe wird erfindungsgemäß gelöst durch das modular aufgebaute elektronische Kraftfahrzeugregelungssystem gemäß Anspruch 1.

Das Kraftfahrzeugregelungssystem gemäß der Erfindung umfasst ein Chassisbasismodul, welches der Modularisierung von Chassis-Steuersystemen in der Kfz-Technik dient, insbesondere bei solchen Systemen, die regelungstechnisch direkt oder indirekt auf die Signale der beispielsweise vier Raddrehzahlsensoren eines Personenkraftfahrzeugs und/oder von Inertialsensoren zur Messung der Drehrate und/oder Längsbeschleunigung des Fahrzeugs reagieren. Dem Chassisbasismodul werden also die Signale der Raddrehzahlsensoren zugeführt, wobei dieses die Signale der Raddrehzahlsensoren auswertet und an einen räumlich vom Chassisbasismodul getrennt angeordneten elektronischen Bremsenregler leitet. Dabei sind das Chassisbasismodul und der Bremsenregler bevorzugt in separaten Steuergerätegehäusen angeordnet.

In das obige System können zum Beispiel heutige Fahrzeugfunktionen wie die elektronische Stabilitätskontrolle durch Bremseneingriff (ESC oder auch ESP), die Stabilitätskontrolle mittels elektronischer Lenkkorrektur, InsassenschutzSysteme (z.B. passiv, wie Airbag, Gurtstraffer etc. oder aktiv, z.B. Fahrerassistenzsysteme wie Contiguard(R)) oder Systeme zur situationsabhängigen Feder-/Dämpferregelung integriert sein.

Das erfindungsgemäße Regelungssystem umfasst im Falle eines hydraulischen Bremsenprinzips bevorzugt weiterhin eine hydraulische Einheit, in die zumindest die Hydraulikventile für die Bremsenansteuerung integriert sind. Dabei bildet bevorzugt zumindest der elektronische Bremsenregler mit der hydraulischen Einheit eine miteinander insbesondere fest verbundene Einheit. Es ist aber auch möglich, dass die hydraulische Einheit getrennt vom Bremsenregler angeordnet ist. Die Ansteuerung der Bremsen kann alternativ auch pneumatisch oder elektrisch erfolgen. Eine gemischte Ansteuerung ist ebenfalls denkbar und in bestimmten Anwendungsfällen vorteilhaft, zum Beispiel wenn an der Hinterachse eine Kombination mit einer elektrischen Parkbremse vorgenommen wird, während an der Vorderachse ein hydraulisches oder pneumatisches Prinzip Vorrang hat.

In oder an das Gehäuse des Chassisbasismoduls ist/sind vorzugsweise der oder die Inertialsensor/en integriert, welcher bzw. welche zum Beispiel einen Gierratensensor und/oder einen oder mehrere Beschleunigungssensoren umfassen.

Das Chassisbasismodul ist bevorzugt zu einer Sicherheitsdomänenkontrolleinheit weitergebildet, welche zumindest ein ESC-Modul mit ESC-Regelfunktionen beinhaltet. Im beschriebenen Fall der Trennung von ESC-Funktion und Bremsenfunktion ergibt sich daher in einer Weiterbildung der Erfindung, dass der Bremsenregler keine ESC-Regelfunktionen umfasst.

In dem erfindungsgemäßen Kraftfahrzeugregelungssystem wird vorzugsweise der Lenkwinkel erfasst und die Erfassung des Lenkwinkels in einem räumlich vom Bremssystem und vom Chassisbasismodul getrennten Bereich durchgeführt.

Dem erfindungsgemäßen Kraftfahrzeugregelungssystem werden Signale von Raddrehzahlsensoren zugeführt. Bei den Raddrehzahlsensoren handelt es sich vorzugsweise um aktive Magnetfeldsensoren, welche Raddrehzahlinformationen und insbesondere Zusatzinformationen über eine Stromschnittstelle an eine Einrichtung zur Radsignalverarbeitung übertragen. Besonders bevorzugt handelt es sich um Raddrehzahlsensoren, die nach dem Hall- oder dem AMR-Prinzip arbeiten.

Die Verarbeitung für die Raddrehzahlsignale (Raddrehzahlsignalverarbeitung) ist zweckmäßigerweise in das Chassisbasismodul oder die Sicherheitsdomänenkontrolleinheit integriert.

Gemäß einer weiteren bevorzugten Ausführungsform umfasst die Sicherheitsdomänenkontrolleinheit außerdem zumindest eine Fahrwerksregelungsfunktion. Durch diese Verknüpfung in einem Regler kann das Fahrwerk auf fahrdynamische oder sicherheitsrelevante Ereignisse (zum Beispiel ESP-Eingriff beim Ausbrechen des Fahrzeugs) schneller angepasst werden.

Gemäß einer weiteren bevorzugten Ausführungsform des Kraftfahrzeugregelungssystems ist dieses nicht nur wie üblich mit einem sondern mit mehreren, insbesondere radindividuellen Bremsenreglern ausgestattet, so dass beispielsweise eine radindividuelle, achsindividuelle oder bremskreisindividuelle Ansteuerung von Bremsaktuatoren (zum Beispiel hydraulische Radbremszylinder) erfolgen kann. Als Bremsaktuatoren kommen zum Beispiel hydraulische oder elektrische Bremsaktuatoren zum Einsatz.

Weitere bevorzugte Ausführungsformen ergeben sich aus den Unteransprüchen und der nachfolgenden Beschreibung von Ausführungsbeispielen an Hand von Figuren.

Es zeigen
- Fig. 1: eine schematische Darstellung einer ESC-Einrichtung (Stand der Technik),
- Fig. 2: eine schematische Darstellung einer ESC-Einrichtung mit Sensorintegration (Stand der Technik), und
- Fig. 3: eine schematische Darstellung eines Chassis-Steuergerätes mit ESC-Funktion (Stand der Technik),
- Fig. 4: eine schematische Darstellung einer Bremsanlage mit zentralem Chassisbasismodul (CBM),
- Fig. 5: eine schematische Darstellung eines Chassis-Steuergerät mit einer Sicherheitsdomänenkontrolleinheit (SDC).

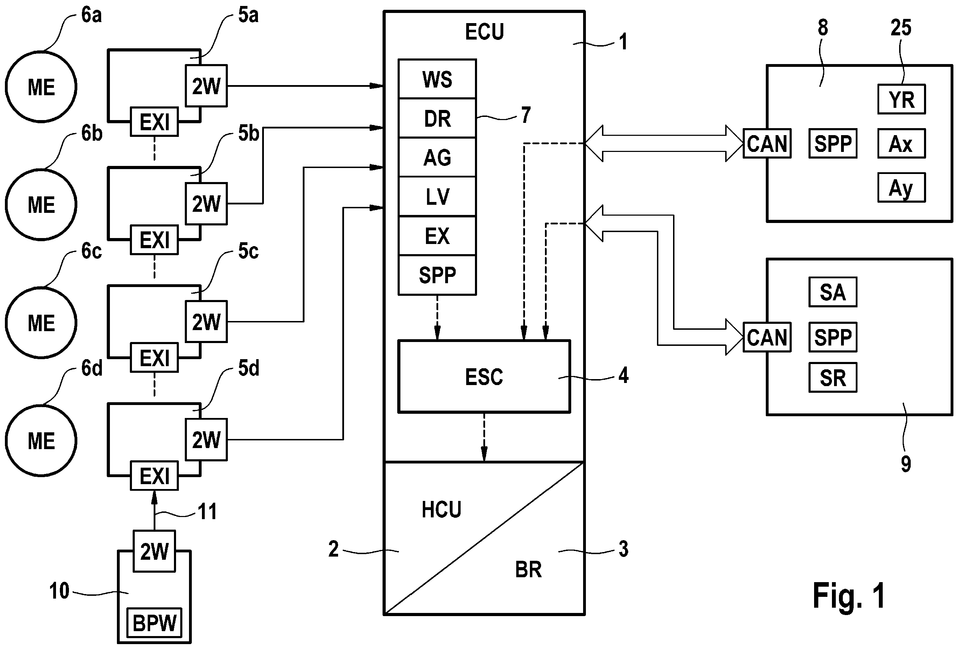

In Fig. 1 ist eine an sich bekannte Fahrdynamik-Einrichtung (Elektronisches Stabilitätsprogramm ESP, "Electronic Stability Control" ESC) schematisch dargestellt, welche funktional eng gekoppelt mit einem elektronisch gesteuerten Bremssystem (ECU/HCU/BR) zusammenwirkt. Dieses besteht im wesentlichen aus der Kombination eines elektronischen Bremsenreglers (ECU) 1 mit einer hydraulischen Steuereinheit (HCU) 2, die den Betriebsdruck der Bremsen (BR) 3 beeinflussen kann. Wie auch die ABS-Funktion kann die Fahrdynamikregelung (ECUresidente ESC-Regelalgorithmen) 4 ESC den Radbremsdruck über den Bremsenregler verändern. Bei der ESC-Regelung wird permanent der augenblickliche ESC-spezifische dynamische Fahrzeugzustand durch Raddrehzahlsensoriken 5, 6, Inertialsensoren 8 und Lenkbewegungssensoren 9 erfasst und mit intern berechneten Sollwerten eines Fahrzeugmodells verglichen. Überschreiten die Abweichungen des augenblicklichen Fahrzeugzustandes die Toleranzschwellen der Sollwerte, wird durch separate Betätigung der vier Bremsen jede je nach Schwellenwerten nicht als zulässig bewertete Fahrzeugbewegung, insbesondere eine Schleuderbewegung, in einen stabilen Fahrzeugzustand zurückgeführt.

Die vier Raddrehzahlerfassungssysteme, bestehend aus den aktiven Raddrehzahlsensoren 5a, 5b, 5c, 5d im Zusammenwirken mit zugehörigen Encodern 6a, 6b, 6c, 6d, haben für Chassis-Steuersysteme, insbesondere elektronisch gesteuerte Bremssysteme essentielle Bedeutung. Bei einer gegenwärtig modernen Ausführungsform besitzen die Sensoren jeweils eine Zweidrahtverbindung (2W) zur ECU. Als Encoder (Winkelmaßstab) dient eine alternierende Folge permanent magnetisierter Nord/Südpol-Areale, die eine zum Kreis geschlossene Encoderspur bildet, die in die Radlagerdichtungen einmagnetisiert ist (ME). Zur Raddrehzahlerfassung ist die Radlagerdichtung mit dem drehenden Ring des Radlagers mechanisch verbunden und die Encoderspur wird durch den ortsfesten aktiven Sensor berührungslos abgetastet. Dazu ist der Sensor über einen Luftspalt magnetisch an die Encoderspur gekoppelt. Aktive Sensoren sind in einer Ausprägung auf Basis des Hall-Effektes oder unter Nutzung der verschiedenen magnetoresistiven Effekte, insbesondere des anisotropen magnetoresistiven Effektes, bei dem dünne Schichten aus Permalloy ihren ohmschen Widerstand in Abhängigkeit von Stärke und Richtung eines magnetischen Feldes parallel durch diese Schichten verändern, bekannt. Dies geschieht, wenn die Encoderspur am Sensor vorbeibewegt wird. Eine in den Sensor integrierte elektronische Schaltung setzt diese Widerstandsänderungen in zwei unterschiedliche Strompegel um, die als Ausgangssignal selbst oder Teil eines komplexeren Ausgangssignals die Aufeinanderfolge von Nordpol und Südpol abbilden. Die Wirkungsweise der aktiven Sensoren mit komplexem Ausgangssignal ist in der DE 196 34 715 (P 8775) bzw. in der DE 199 11 774 (P 9352) beschrieben. In ihrer industriell verfügbaren Ausführungsform liefern sie neben der Raddrehzahl (WS) zusätzlich verschiedene Zusatzinformationen wie Drehrichtung (DR), Luftspaltfeldstärke (AG), Unterspannungserkennung (LV), siehe DE 101 46 949 (P 10004), und externe Statussignale (EX), die aus dem Radbereich, dem so genannten "Rad-Corner-Bereich" von externen Statusgebern 10 über Verbindungsleitungen 11 einem zusätzlichen Signaleingang (EXI) den Raddrehzahlfühlern 5 und über diese an die ECU übermittelt werden können. Ein entsprechendes externes Statussignal kann z.B. eine elektronische Bremsbelagsverschleißmarke (BPW) sein oder eine ereignisgesteuerte zeitinvariante bitweise Signalfolge, wie in der DE 101 50 760 (P 10018) beschrieben. Aus der Messung der Luftspaltfeldstärke lassen sich Kennwerte ableiten, die eine Präzisierung von Regelschwellen ermöglichen, wie es z.B. aus der DE 10 2006 036 270 (P 11316) hervorgeht.

Die durch obige Sensoren erzeugte Drehzahlinformation und ggf. Zusatzinformation wird ECU-intern in einem Dekoder 7 mit Signalpreprozessingstufe (SPP) aufbereitet und den ESC-Algorithmen 4 verfügbar gemacht. Die Inertialsensoren sind nach dem gegenwärtigen Stand der Technik in einer, als Sensorcluster bzw. Cluster bezeichneten separaten Gehäuseeinheit 8 untergebracht, wie sie zum Beispiel in der DE 199 216 92 (P 9535) beschrieben ist. Üblicherweise enthalten diese Cluster-Gehäuseeinheiten einen Gierratensensor (YR), einen Längsbeschleunigungssensor (Ay) sowie zumindest einen Querbeschleunigungssensor (Ax), deren Signale zunächst konditioniert und dann über einen Bus (CAN) an die ECU übertragen werden müssen.

Die ESC-Regelung 4 benötigt weiterhin Signale einer Lenkbewegungssensorik 9, welche in der Regel im Bereich des Lenkrads untergebracht ist. Innerhalb dieser Lenkbewegungssensorik 9 werden Signale für den Lenkwinkel (SA) und dessen Drehgeschwindigkeit (SR) erzeugt, konditioniert und danach über einen Bus (CAN) an den Bremsenregler 1 (ECU) übertragen.

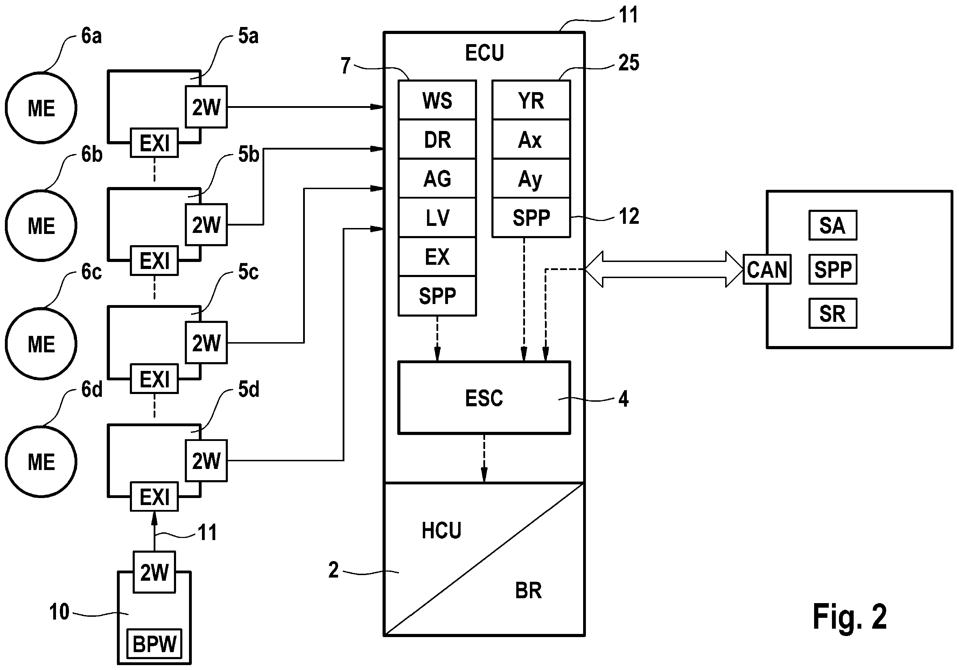

Die Anordnung in Fig. 2 unterscheidet sich von der Anordnung gemäß Fig. 1 durch die Integration der Inertialsensorik 25 in den Bremsenregler 11 (ECU). Ein zusätzliches Gehäuse für die Sensorclustereinheit sowie die für diese Einheit erforderliche CAN-Verbindung kann dadurch entfallen. Die Elektronik zur spezifischen Konditionierung des Gierratensensorsignals und das Signalpreprocessing (SPP) 12 des Clusters sind damit dann ebenfalls Bestandteil des Bremsenreglers 11. Die Lenkwinkelsensorik 9 ist bei der hier beschriebenen Anordnung separat vom Bremsenregler 11 angeordnet. Die Signale der vier Raddrehzahlsensoren 5a bis 5d werden, wie zuvor, dem Bremsenregler 11 zugeführt und dort in Dekoder 7 dekodiert. Ein Bremssystem, das entsprechend dem Prinzip der Anordnung in Fig. 2 aufgebaut ist, wurde bereits in der EP 131 36 35 B1 (P 9928) beschrieben.

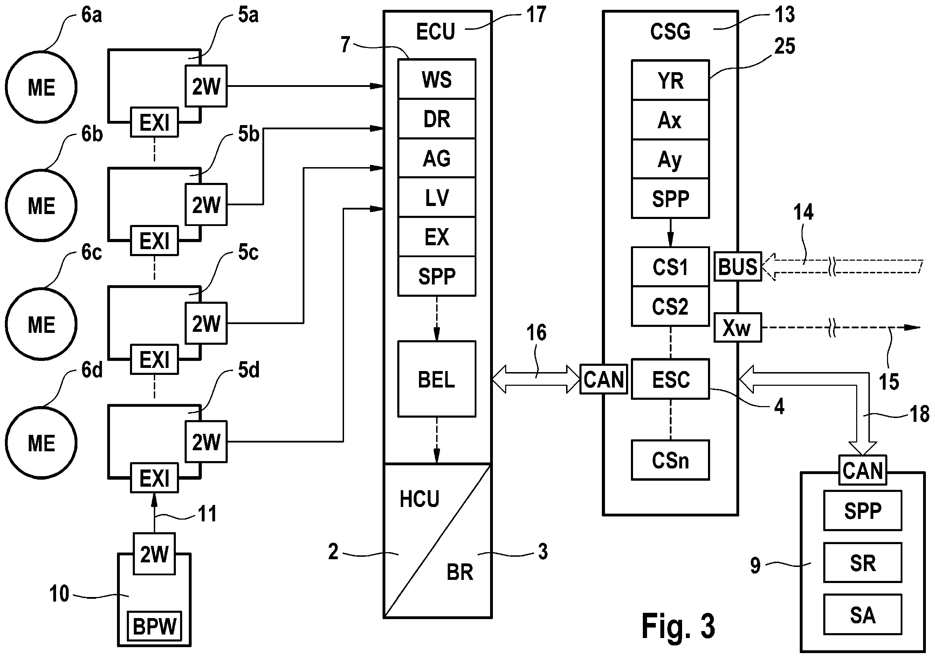

In Fig. 3 ist das Schema eines allgemeinen Chassissteuergerätes (CSG) 13 mit darin integrierter ESC-Funktion 4 dargestellt. Im Chassissteuergerät (CSG) 13 sind weiterhin sowohl die Elemente der Inertialsensorik 25, z.B. (YR), (Ax), (Ay) untergebracht, als auch die Betriebsalgorithmen bzw. die Steuer- und Regelprogramme (CS1...CSn) unterschiedlicher Chassis-Systeme, so auch die des ESC-Systems 4. Das ChassisSteuergerät 13 tauscht dazu elektrische Signale mit den beteiligten Chassis-Systemen über Bus-Verbindungen 14 und Leitungsverbindungen 15 aus. Insbesondere zur Realisierung der ESC-Funktion 4 existieren eine CAN-Verbindung 16 zum Bremsenregler 17 und eine CAN-Verbindung 18 zur Lenkwinkelsensorik 9. Die Signale der vier Raddrehzahlsensoren 5a bis 5d werden, wie zuvor, der ECU zugeführt und dort dekodiert (Dekoder 7). Bei dem hier beschriebenen Ausführungsbeispiel eines Bremssystems mit Chassissteuergerät 13 fungiert der Verbund von Bremsenregler 17 und Hydraulikeinheit 2 als ein intelligenter Aktuator mit unterlagerten Regelfunktionen in Bezug auf die Bremse 3 und mit einer Kombination einer Raddrehzahlsignalverarbeitungseinheit 7, welche als Quelle sensorischer Raddrehzahlinformationen in Bezug auf das ChassisSteuergerät dient.

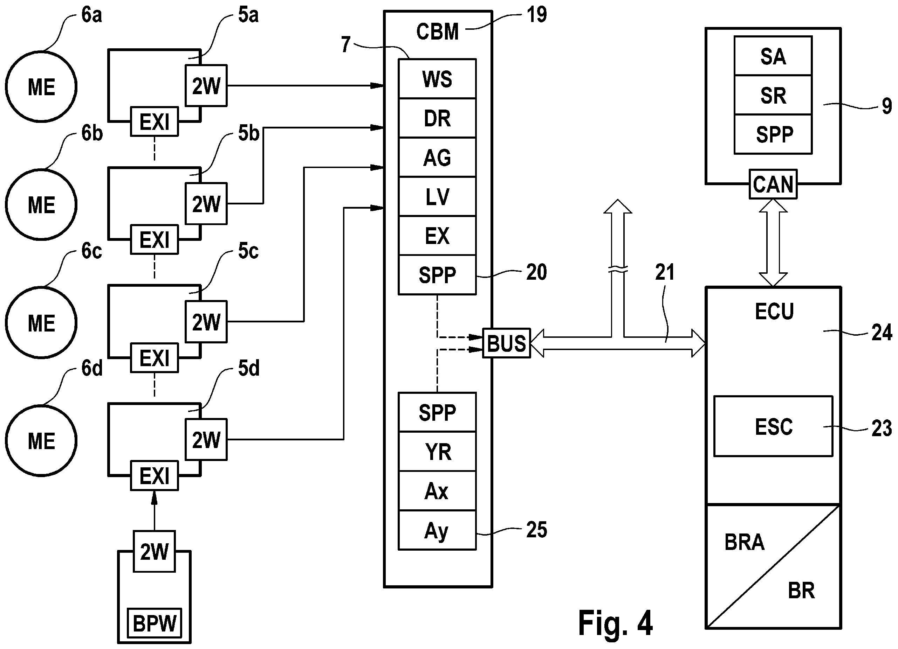

Ein wesentliches gemeinsames charakteristisches Merkmal der vorstehend aufgeführten Ausführungsbeispiele gemäß den Figuren 1 bis 3 ist die unmittelbare Zuführung der Raddrehzahlinformationen zum elektronischen Bremsregler 1, 11, bzw. 17 durch Leitungsverbindungen der Raddrehzahlerfassungssysteme mit dem elektronischen Bremsenregler und zugehöriger Signalaufbereitung in diesen Geräteeinheiten. Gemäß dem Beispiel einer Anordnung in Fig. 4 wird dieses traditionelle Systemkonzept erfindungsgemäß aufgebrochen und modularisiert. Dies erfolgt genau gesagt, in dem die Raddrehzahlerfassung und zusätzlich, wenn vorhanden, deren beikodierte Zusatzinformation, über ein, von dem eigentlichen Bremsenregler 24 unabhängiges, separates Chassisbasismodul 19 (CBM) vorgenommen wird. Ein unmittelbarer Vorteil dieses Konzeptes besteht darin, dass die ortsäquidistanten (ereignisgesteuerten) zeitvarianten Raddrehzahlsignale der Encoderspur und die ihnen zeitinvariant folgenden Bits der Zusatzinformationen auf einfache Weise signalspezifisch dekodiert werden können, ohne die Notwendigkeit einer aufwändigen, technisch nie ganz informationsfehlerfreien Synchronisation mit dem zeitinvarianten Systemtakt der ECU von beispielsweise ca. 10 ms. Die bereits erwähnten Zusatzinformationen, wie zum Beispiel in der DE 101 50 760 (P 10018) beschrieben, lassen sich also bit-seriell über die einem Raddrehzahlpuls folgende Sequenz von Zusatzinformations-Bits übertragen. Hierzu ist ein spezielles Bit verfügbar, dass den logischen Status des externen Eingangs der Raddrehzahlsensoren 5 (EXI) in dem Dekoder 7 (EX) abbildet. Bei Verwendung eines Encoders mit 48 Nord/Südpolpaaren ergeben sich pro Radumdrehung 96 Bit (12 Byte) externer Zusatzinformation, die aus dem Rad-Corner über die Raddrehzahlsensoren zusätzlich übertragen werden können. Diese Information fällt ortsinvariant (lineare, gleiche Encoderwinkelteilung) aber zeitvariant (unterschiedliche Radgeschwindigkeit) an. Die Information könnte z.B. ein Maß für den augenblicklichen Reifendruck beinhalten. Nachteilhafterweise würde die Synchronisation dieser geschwindigkeitsabhängigen Bit-Folge mit dem Systemtakt des Bremsenreglers 24 eine aufwändige technische Ergänzungsmaßnahme erfordern, während die Signalaufbereitungsstufe eines Chassisbasismoduls von derartigen Notwendigkeiten unabhängig ist. Die Signalkonditionierungs- und Prozessierungsstufen 20 (SPP) können auf die Besonderheiten hochauflösender ortsinvarianter Signalerfassung mit anhängender zeitinvarianter Zusatzinformation optimiert werden, spezifische Filterprozesse durchführen und über einen Bus 21 einen kontinuierlichen Strom digitaler Raddrehzahlinformationen allgemein verfügbar machen.

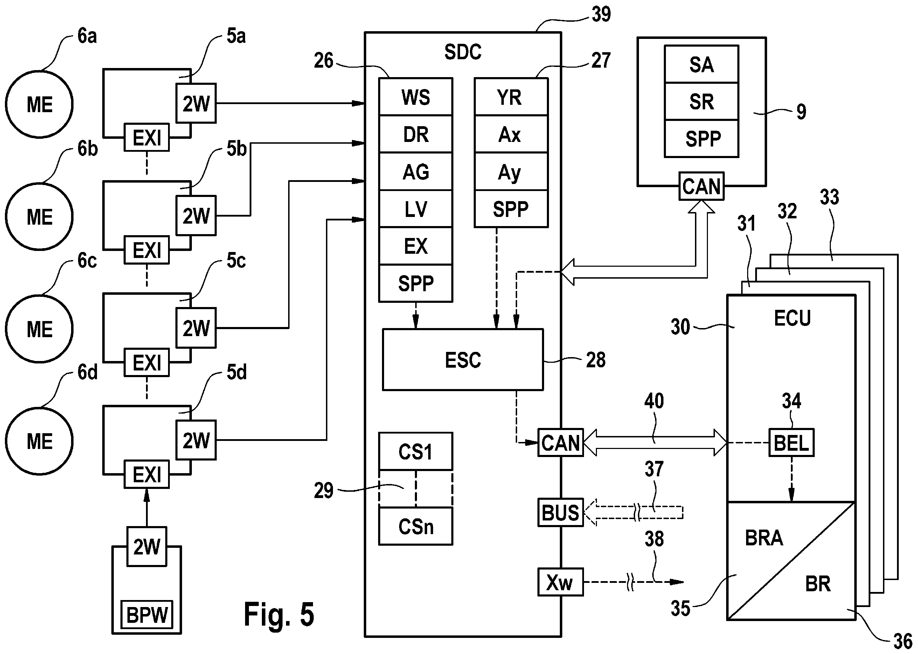

Gemäß einer bevorzugten Variante des dargestellten Beispiels wird wie in Fig. 4 dargestellt, die Raddrehzahlerfassung 7 mit der Inertialsensorik 25 gerätetechnisch kombiniert, also in einem gemeinsamen Gehäuse untergebracht. Bei dieser Variante verbleibt die ESC-Regelung 23 wie bisher im elektronischen Bremsenregler 24, dem auch weiterhin die Signale der Lenkwinkelsensorik 9 zugeführt werden. Fig. 5 zeigt eine Steuergeräteanordnung, bei der eine Nutzung des in Fig. 4 erläuterten Chassisbasismoduls 19 (CBM) als Grundbaustein einer Sicherheitsdomänenkontrolleinheit 39 (Safetydomaincontroller, SDC) dient. Die Sicherheitsdomänenkontrolleinheit 39 bezeichnet ein erweitertes ChassisSteuergerät, ähnlich CSG in Fig. 3, jedoch mit vorwiegend sicherheitsspezifischer Zielstellung. In der Sicherheitsdomänenkontrolleinheit 39 integriert sind neben den Komponenten des Chassisbasismoduls 19 (Raddrehzahlverarbeitung bzw. -erfassung 26 und Inertialsensorik 27) zusätzlich auch die ESC-Regelalgorithmen 28 einschließlich der entsprechenden Hard- und Software für die ESC-Regelfunktionen, sowie die Hard- und Software weiterer Chassisfunktionen 29 (CS1...CSn), die mit den zugehörigen Chassisgeräten über Busverbindungen 37, 40 und/oder Leitungsverbindungen 38 korrespondieren. Zur Erfüllung der ESC-Funktion werden der Sicherheitsdomänenkontrolleinheit 39 die Signale des Lenkwinkelsensors 9 zugeführt. Über Busverbindung 40 gelangen die ESC-Steuersignale und vorzugsweise auch Bremssteuersignale an den Bremsregler 30 oder zusätzlich an die Bremsregler 31, 32, 33, die über ihre Betriebselektronik (BEL) 34 Bremsaktuatoren 35 (BRA) kontrollieren, zur Betätigung der Bremsen 36 (BR). Das Konzept ermöglicht vorteilhaft die parallele Nutzung unterschiedlicher Bremsaktuatoren, z.B. sowohl hydraulisch betriebene als auch elektrisch betriebene Aktuatoren auf unterschiedlichen Achsen.

## Patentansprüche

1. Modular aufgebautes elektronisches Kraftfahrzeugregelungssystem umfassend Raddrehzahlsensoreingänge, zumindest einen Bremsensregler (1, 11, 17, 24, 30) sowie Inertialsensoren, wobei ein Chassisbasismodul (19) vorhanden ist, dem die Signale der Raddrehzahlsensoren (5) zugeführt werden und das diese Signale auswertet und an einen räumlich vom Chassisbasismodul (19) getrennt angeordneten elektronischen Bremsenregler (24) leitet, und wobei insbesondere das Chassisbasismodul (19) und der Bremsenregler (24) in separaten Steuergerätegehäusen angeordnet sind, **dadurch gekennzeichnet, dass** in das Gehäuse des Chassisbasismoduls (19) der oder die Inertialsensoren (25) integriert sind.

2. System nach Anspruch 1, **dadurch gekennzeichnet, dass** eine hydraulische Einheit (2) vorgesehen ist, in die zumindest die Hydraulikventile für die Bremsenansteuerung integriert sind, und wobei bevorzugt der elektronische Bremsenregler (24) und die hydraulischen Einheit eine miteinander insbesondere fest verbundene Einheit bildet.

3. System nach Anspruch 1 oder 2, **dadurch gekennzeichnet, dass** das Chassisbasismodul (19) zu einer Sicherheitsdomänenkontrolleinheit (39) weitergebildet ist, welche zumindest ein ESC-Modul (28) mit ESC-Regelfunktionen beinhaltet.

4. System nach Anspruch 3, **dadurch gekennzeichnet, dass** der Bremsenregler (30) keine ESC-Regelfunktionen umfasst.

5. System nach mindestens einem der Ansprüche 1 bis 4, **dadurch gekennzeichnet, dass** der Lenkwinkel erfasst wird und die Erfassung des Lenkwinkels in einem räumlich vom Bremssystem und vom Chassisbasismodul (19) getrennten Bereich (9) erfolgt.

6. System nach mindestens einem der Ansprüche 1 bis 5, **dadurch gekennzeichnet, dass** die Raddrehzahlsensoren (5) aktive Magnetfeldsensoren sind, welche Raddrehzahlinformationen und insbesondere Zusatzinformationen über eine Stromschnittstelle an eine Radsignalverarbeitung (7, 26) übertragen.

7. System nach mindestens einem der Ansprüche 3 bis 6, **dadurch gekennzeichnet, dass** die Raddrehzahlsignalverarbeitung (26) in das Chassisbasismodul (19) oder die Sicherheitsdomänenkontrolleinheit (39) integriert ist.

8. System nach mindestens einem der Ansprüche 4 bis 7, **dadurch gekennzeichnet, dass** die Sicherheitsdomänenkontrolleinheit (39) mindestens eine Fahrwerksregelungsfunktion (29) umfasst.

9. System nach mindestens einem der Ansprüche 1 bis 8, **dadurch gekennzeichnet, dass** mehrere Bremsenregler (30, 31, 32, 33) vorgesehen sind, insbesondere zur radindiviuellen, achsindividuellen oder bremskreisindividuellen Ansteuerung von Bremsaktuatoren, wie zum Beispiel hydraulische oder elektrische Bremsaktuatoren (35).

## Claims

1. Electronic motor vehicle control system which is of modular design and comprises a wheel speed sensor input, at least one brake controller (1, 11, 17, 24, 30) and inertial sensors, wherein a chassis base module (19) is provided to which the signals of the wheel speed sensors (5) are fed and which evaluates the signals and feeds them to an electronic brake controller (24) which is arranged in a spatially separated fashion from the chassis base module (19), and wherein in particular the chassis base module (19) and the brake controller (24) are arranged in separate control device housings, **characterized in that** the inertial sensor or sensors (25) is/are integrated into the housing of the chassis base module (19).

2. System according to Claim 1, **characterized in that** a hydraulic unit (2) is provided into which at least the hydraulic valves for actuating the brakes are integrated, and wherein the electronic brake controller (24) and the hydraulic unit preferably form one integrally, in particular permanently connected unit.

3. System according to Claim 1 or 2, **characterized in that** the chassis base module (19) is developed to form a safety domain control unit (39) which contains at least one ESC module (28) with ESC control functions.

4. System according to Claim 3, **characterized in that** the brake controller (30) does not comprise any ESC control functions.

5. System according to at least one of Claims 1 to 4, **characterized in that** the steering angle is sensed and the sensing of the steering angle takes place in a region (9) which is spatially separated from the brake system and from the chassis base module (19).

6. System according to at least one of Claims 1 to 5, **characterized in that** the wheel speed sensors (5) are active magnetic field sensors which transmit wheel speed information and, in particular, additional information to a wheel signal processing means (7, 26) via a current interface.

7. System according to at least one of Claims 3 to 6, **characterized in that** the wheel speed signal processing means (26) is integrated into the chassis base module (19) or the safety domain control unit (39).

8. System according to at least one of Claims 4 to 7, **characterized in that** the safety domain control unit (39) comprises at least one chassis control function (29).

9. System according to at least one of Claims 1 to 8, **characterized in that** a plurality of brake controllers (30, 31, 32, 33) are provided, in particular for wheel-specific, axle-specific or brake-circuit-specific actuation of brake actuators such as, for example, hydraulic or electrical brake actuators (35).

## Revendications

1. Système électronique de régulation de véhicule automobile réalisé de manière modulaire, comprenant des entrées de capteurs de vitesse de rotation de roues, au moins un régulateur de freinage (1, 11, 17, 24, 30) ainsi que des capteurs inertiels, dans lequel il est prévu un module de base de châssis (19) auquel sont délivrés les signaux des capteurs de vitesse de rotation de roues (5) et qui analyse lesdits signaux et les achemine à un régulateur de freinage électronique (24) disposé de manière spatialement séparée du module de base de châssis (19), et dans lequel le module de base de châssis (19) et le régulateur de freinage (24) sont notamment disposés dans des logements d'appareils de commande séparés, **caractérisé en ce que** le ou les capteurs inertiels (25) est/sont intégré(s) au boîtier du module de base de châssis (19).

2. Système selon la revendication 1, **caractérisé en ce qu'**il est prévu une unité hydraulique (2) à laquelle sont intégrées au moins les soupapes hydrauliques destinées à la commande de freinage et dans lequel le régulateur électronique de freinage (24) et l'unité hydraulique forment de préférence l'une avec l'autre une unité notamment reliée de manière fixe.

3. Système selon la revendication 1 ou 2, **caractérisé en ce que** le module de base de châssis (19) est amélioré de manière à obtenir une unité de contrôle de domaine de sécurité (39) qui comporte au moins un module ESC (28) ayant des fonctions de régulation ESC.

4. Système selon la revendication 3, **caractérisé en ce que** le régulateur de freinage (30) ne comprend pas de fonctions de régulation ESC.

5. Système selon au moins l'une des revendications 1 à 4, **caractérisé en ce que** l'angle de braquage est détecté et **en ce que** la détection de l'angle de braquage est effectuée dans une région (9) spatialement séparée du système de freinage et du module de base de châssis (19).

6. Système selon au moins l'une des revendications 1 à 5, **caractérisé en ce que** les capteurs de vitesse de rotation de roues (5) sont des capteurs de champ magnétique actifs qui transmettent des informations de vitesse de roues et plus particulièrement, des informations supplémentaires concernant une interface de courant avec un dispositif de traitement du signal de roue (7, 26).

7. Système selon au moins l'une des revendications 3 à 6, **caractérisé en ce que** le dispositif de traitement de signal de vitesse de rotation de roue (26) est intégré au module de base de châssis (19) ou à l'unité de contrôle de domaine de sécurité (39).

8. Système selon au moins l'une des revendications 4 à 7, **caractérisé en ce que** l'unité de contrôle de domaine de sécurité (39) comprend au moins une fonction de régulation du train de roulement (29).

9. Système selon au moins l'une des revendications 1 à 8, **caractérisé en ce qu'**il est prévu une pluralité de régulateurs de freinage (30, 31, 32, 33), notamment destinés à une commande d'actionneur de freinage propre à chaque roue, propre à chaque essieu ou propre à chaque circuit de freinage, comme par exemple des actionneurs de freinage (35) hydrauliques ou électriques.
